# DEMANDE DE BREVET EUROPEEN

(11) **EP 0 914 014 A1**
(43) Date de publication de la demande: **06.05.1999**
(21) Numéro de dépôt: 98203516.4
(22) Date de dépôt: 19.10.1998
(51) Int. Cl.: H04Q 7/38, H04Q 7/32

(54) **Système de radiocommunications, radio mobile d'un tel système et procédé pour selectionner un système parmi de tels systèmes fonctionnant dans une mème zone de couverture**

(30) Priorité: 21.10.1997 FR 9713173
(71) Demandeur: Koninklijke Philips Electronics N.V., 5621 BA Eindhoven (NL)
(72) Inventeur: Guilbaud, Yvan, 75008 Paris (FR)
(74) Mandataire: Chaffraix, Jean

(57) **Abrégé**

L'invention s'applique à un système de télécommunications du type cellulaire destiné à communiquer par voie radio avec au moins une station radio mobile dans une zone de couverture donnée commune à d'autres systèmes, ces systèmes ayant une puissance de réception mesurable par la station mobile dans la zone de couverture. Le but de l'invention est de fournir à un utilisateur en "roaming" dans la zone de couverture de ces systèmes, des moyens de contrôle de la puissance de réception de chaque système disponible pour éventuellement si son abonnement le lui permet, se connecter sur le système qui offre la meilleure puissance.

## Description

L'invention concerne un système de radiocommunications du type cellulaire ayant une puissance de réception dans une zone de couverture radio donnée commune à au moins un autre système du même type, ces systèmes étant dits accessibles par une station radio mobile située dans ladite zone commune lorsque leur puissance de réception est supérieure à une valeur de consigne, ladite station comportant des moyens de mesure des puissances de réception de ces systèmes.

Elle concerne aussi un procédé de sélection manuelle mis en oeuvre par une station mobile comportant des moyens de communication par lien radio avec au moins un système de radiocommunications du type cellulaire ayant un niveau de puissance de réception dans une zone de couverture donnée, un système de ce type étant dit accessible dans ladite zone lorsque sa puissance de réception y est supérieure à une valeur de consigne, pour sélectionner un système parmi les systèmes accessibles dans ladite zone.

L'invention concerne enfin un équipement radio mobile comportant :
- des moyens de communication par lien radio avec au moins un système de transmissions radioélectriques du type cellulaire ayant une puissance de réception dans une zone de couverture donnée, un système étant dit accessible dans ladite zone lorsque sa puissance de réception y est supérieure à une valeur de consigne,
- des moyens de mesure des puissances de réception des systèmes accessibles.

L'invention s'applique à tous systèmes de télécommunications radio cellulaire et en particulier aux systèmes fonctionnant selon des normes de type GSM (de l'anglais Global System for Mobile communications), NMT (de l'anglais Nordic Mobile Telephone), DCS1800 (de l'anglais Digital Communication System, fonctionnant à 1800 MHz), PCS1900 (Personal Communication System, fonctionnant à 1900 MHz), etc.

Elle est avantageuse dans le cas d'un système offrant la possibilité aux utilisateurs ayant par exemple souscrit un abonnement adéquat, de se connecter sur un autre système pour bénéficier d'une couverture plus étendue ou bien pour obtenir un service particulier.

Cette possibilité est connue, selon la nomenclature G.S.M., sous le nom de "roaming". Un abonné effectue un "roaming" lorsqu'il se connecte sur un système ou réseau différent de celui avec lequel il a souscrit son abonnement. Se pose alors la question du choix du réseau, étant donné qu'il en existe en général plusieurs, gérés par des fournisseurs de réseaux, sur lesquels un abonné en "roaming" est autorisé à se connecter.

Le brevet américain publié sous le numéro US 5,586,338 décrit un système, un procédé et une station radio mobile du genre mentionnés dans le préambule, permettant de sélectionner automatiquement un système en fonction de critères prédéfinis. Les critères de choix sont préprogrammés dans la station mobile au moment de sa configuration logicielle par le fournisseur de réseau.

Ainsi, la sélection se fait de façon transparente pour l'abonné, c'est-à-dire que celui-ci n'intervient pas dans la procédure de sélection du système, ce qui peut constituer un premier inconvénient si ses critères de choix sont différents de ceux utilisés par son fournisseur de réseau.

Dans le cas d'un système de type G.S.M. fonctionnant selon la recommandation ETS 300 507 paragraphe 3.2.2.2, une re-sélection automatique de réseau ne peut être effectuée que dans deux situations particulières :
- à la mise sous tension de la station mobile et
- en cas de perte du signal radio provenant du réseau dit courant, c'est-à-dire le réseau auprès duquel la station mobile est enregistrée.

La norme ne prévoit pas de re-sélection automatique tant que le système sur lequel la station mobile est connectée lui offre une couverture, même faible ; ce qui peut constituer un deuxième inconvénient. En effet, dans certains cas, un utilisateur peut préférer changer de réseau avant de perdre complètement le signal radio de son réseau courant pour obtenir une meilleure qualité de réception.

De plus, cette recommandation impose l'ordre d'affichage des différents réseaux "visibles" par la station mobile ou "disponibles", c'est-à-dire comportant des fréquences sur lesquelles la station mobile réussit à se synchroniser. Cet ordre d'affichage ne tient pas compte de la puissance de réception des signaux radio.

L'invention propose des moyens pour remédier dans une large mesure à ces inconvénients. Notamment, il est prévu d'apporter à l'utilisateur des informations sur la qualité des liaisons radio fournies par les systèmes sur lesquels il est autorisé à se connecter.

Pour cela, un système du genre déjà mentionné est remarquable en ce que la station mobile comporte également des moyens de contrôle des résultats de mesures pour fournir à un utilisateur des indications sur lesdites puissances de réception des systèmes accessibles.

De même, un procédé du type mentionné est remarquable en ce qu'il comporte :
- une étape de mesure desdits niveaux de puissance reçus par ladite station radio dans la zone de couverture,
- une étape d'affichage au niveau de ladite station radio, de codes de puissance correspondant aux niveaux mesurés.

Selon une caractéristique de l'invention, un tel procédé peut comporter en plus une étape de sélection manuelle pour sélectionner, en fonction des codes affichés, un système parmi les systèmes accessibles dans ladite zone.

Enfin, un équipement radio mobile tel que mentionné est remarquable en ce qu'il comporte des moyens de contrôle des résultats de mesure pour fournir à un utilisateur des indications de puissance associées auxdits systèmes.

Selon une caractéristique importante de l'invention, une radio mobile du genre ci dessus est remarquable en ce qu'elle comporte de plus :
- des moyens de sélection manuelle d'un système parmi les systèmes accessibles,
- des moyens de connexion auprès de ce système, pour s'enregistrer auprès de ce système sélectionné en fonction de sa puissance de réception dans ladite zone.

Ainsi, la sélection est effectuée sur une commande manuelle de l'utilisateur et peut être déclenchée à tout moment, notamment alors que le système courant a une puissance de réception suffisante pour communiquer avec une station mobile dans la zone de couverture concernée.

L'invention apporte l'avantage supplémentaire de respecter l'ordre d'affichage imposé par la recommandation citée, tout en fournissant à l'utilisateur des moyens pour classer les différents réseaux disponibles sur une zone de couverture, en fonction de leur puissances de réception respectives.

La description suivante, faite en regard des dessins ci-annexés, le tout donné à titre d'exemple non limitatif fera bien comprendre comment l'invention peut être réalisée.
La figure 1 représente un exemple de système selon l'invention.
La figure 2 représente un schéma bloc d'une station mobile appartenant au système de la figure 1.
La figure 3 représente un exemple de procédé selon l'invention pour sélectionner un système G.S.M. en fonction de sa puissance de réception dans une zone de couverture donnée.

Bien que le mode de réalisation préféré de l'invention soit appliqué à un système de type G.S.M., elle peut avantageusement être réalisée pour d'autres systèmes moyennant les adaptations nécessaires, évidentes pour l'homme de l'art.

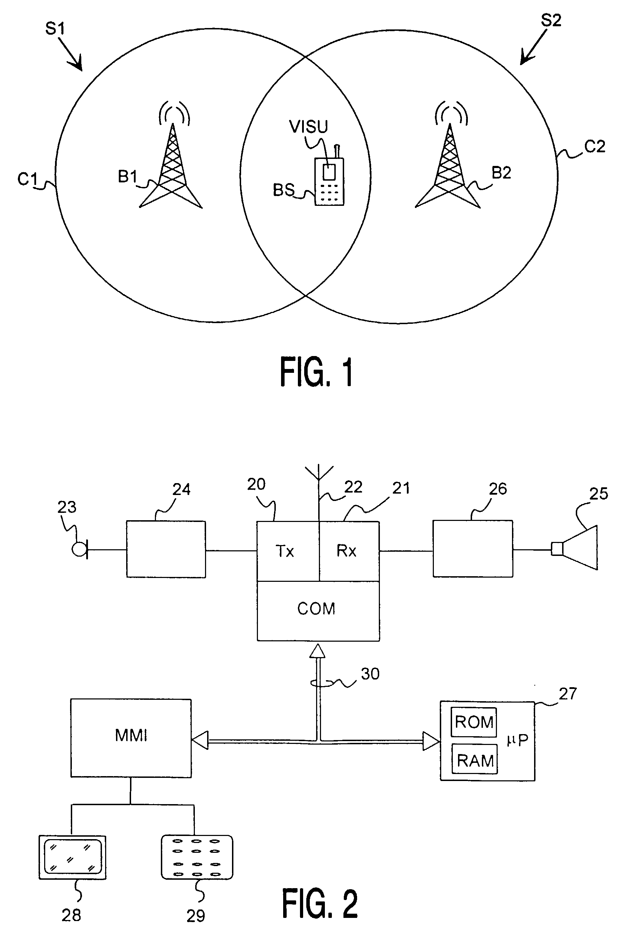

La figure 1 représente très schématiquement un premier système cellulaire de type G.S.M. auprès duquel un utilisateur muni d'une station mobile (ou mobile) a souscrit un contrat, et un deuxième système compatible avec la norme G.S.M. sur lequel le mobile est autorisé à se connecter, grâce à des accords entre les fournisseurs de ces deux systèmes.

Dans l'exemple de la figure, le premier système S1 est schématisé par une unique cellule C1 couverte par une station radio de base B1, tandis que le deuxième système S2 est représenté par la cellule C2 couverte par la station de base B2. Un mobile BS abonné au premier système S1 est situé en bordure de couverture de S1 et reçoit donc de B1 un signal radio de qualité médiocre. Selon l'invention, le BS est équipé de moyens de contrôle pour vérifier la qualité de réception des signaux radio provenant de chaque système couvrant la zone de réception. Ces moyens comprennent un écran de visualisation VISU et seront détaillés dans la suite de la description.

Le mobile affiche sur son écran de contrôle VISU les deux systèmes S1 et S2 accessibles depuis la zone où il se trouve, accompagnés d'un code représentant leur niveau de puissance de réception. Ce code peut être un nombre entier, un graphique susceptible d'illustrer différents niveaux ou encore une chaîne de caractère, etc. Selon le mode de réalisation préféré de l'invention, ce code est un entier compris entre 1 et 4.

Dans l'exemple illustré, S1 est affecté d'un code 1 pour indiquer que les signaux provenant de la station B1 sont reçus avec une puissance faible et S2 est affecté du chiffre 4 pour indiquer que les signaux provenant de la station B2 sont reçus avec une puissance beaucoup plus forte. L'écran VISU du mobile peut afficher ces informations sous la forme d'un tableau dans lequel les systèmes accessibles sont rangés dans l'ordre déterminé au paragraphe 3.2.2.2.B de la recommandation ETS 300 507, correspondant au mode de sélection manuelle. Cet ordre est le suivant :
1) le HPLMN, de l'anglais (Home Public Land Mobile Network), qui est le système auprès duquel l'utilisateur a souscrit un contrat d'abonnement ou de service,
2) chaque PLMN contenu dans le champ "PLMN selector" de la carte SIM, par ordre de priorité,
3) les autres PLMN dans un ordre aléatoire.

Un exemple de présentation est illustré par la Table 1.

**Table 1**

| | |
|---|---|
| S1 | 1 |
| S2 | 4 |

Dans l'exemple, l'utilisateur désire transmettre des données de type fax à l'aide de son mobile. Ce genre de transmissions requérant une bonne qualité de liaison radio, l'utilisateur va donc sélectionner le système S2 ayant la meilleure puissance de réception, afin d'éviter les erreurs de transmissions.

L'invention est également avantageuse pour tester les niveaux de puissance de réception des différents systèmes accessibles depuis une certaine zone géographique. Par exemple, avant de souscrire un abonnement à l'un de ces systèmes, il est intéressant de comparer le niveau de puissance de réception de chaque système dans la zone de couverture où l'on a l'intention d'utiliser son mobile. Or, selon l'état actuel de la technique, on ne connait le niveau de réception d'un système que lorsque l'on y est enregistré, ce qui signifie que l'utilisateur ne connaît pas les niveaux de réception des systèmes sur lesquels il n'est pas autorisé à se connecter.

La figure 2 représente un schéma bloc général du radiotéléphone (BS) conforme à l'invention.

Il comporte des circuits d'émission-réception (Tx/Rx, 20/21) couplés à une antenne 22 pour échanger des messages de signalisation avec les systèmes présents dans la zone de couverture du BS et pour se connecter sur l'un d'entre eux sélectionné selon un procédé conforme à l'invention.

Selon la technique GSM connue, le circuit d'émission 20 reçoit des signaux vocaux provenant d'un microphone 22 via un ensemble de circuits 24 comprenant un convertisseur analogique-numérique et des circuits classiques de traitement de la parole, pour les transmettre ensuite à l'antenne 22. Le circuit de réception 21 reçoit de l'antenne 22 des signaux destinés à un haut-parleur 25 via un ensemble de circuits 26 dont le rôle est d'effectuer le traitement inverse à celui réalisé par l'ensemble 24. Le circuit de réception 21 comporte un dispositif de mesure coopérant avec un circuit de commande radio COM pour mesurer les puissances de réceptions des systèmes "visibles" dans la zone de couverture.

Les opérations du radiotéléphone sont contrôlées par l'organe 27 qui comporte un microprocesseur µP pour effectuer le traitement des signaux émis et reçus par les circuits 20, 21 par l'intermédiaire du circuit d'interface COM ainsi que ceux provenant d'une interface utilisateur MMI qui effectue la gestion de l'écran 28 (VISU) et d'un clavier 29.

L'interface MMI permet notamment à l'utilisateur de commander à l'aide du clavier 29 l'affichage à l'écran 28 d'une liste des systèmes "visibles", affectés d'un code de puissance, cette liste étant stockée en mémoire volatile de type RAM (de l'anglais Random Access Memory), dans l'organe 27. La sélection manuelle d'un système de la liste des "visibles" en vue de déclencher une tentative de connexion sur ce système est également géré par la MMI en coopération avec l'organe 27. Les données transitent entre les interfaces COM, MMI et l'organe 27 par un bus commun 30.

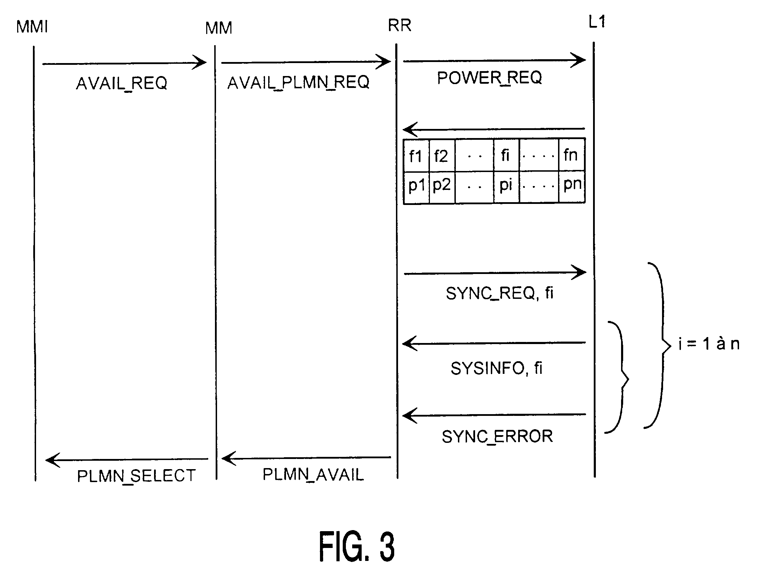

L'organe 27 comporte en outre une mémoire non volatile de type ROM (de l'anglais Read Only Memory) pour stocker le programme de fonctionnement du téléphone exécuté par le microprocesseur, ce programme comportant les instructions necessaires pour réaliser le procédé décrit à la figure 3.

La figure 3 illustre un procédé de sélection manuelle conforme à l'invention. Il est effectué par la station mobile à la demande de l'utilisateur et implique des échanges de messages (représentés par des flèches) entre différentes couches logicielles implémentées dans la station mobile.

La couche MMI représente l'interface utilisateur qui gère l'écran et le clavier. La couche MM gère les informations liées à la mobilité du radiotéléphone, la couche RR gère les ressources radio et la couche L1 réalise l'interface avec la partie matérielle.

Le procédé démarre par une commande manuelle, dans le menu de fonctionnement de l'appareil, pour sélectionner un sous-menu intitulé par exemple "re-connecter". Cette commande déclenche l'exécution du procédé selon l'invention pour afficher la liste des PLMN disponibles, dans l'ordre prévu par la norme GSM, avec une information de puissance associée à chaque PLMN de la liste.

La couche MMI adresse une requête AVAIL_REQ à la couche MM pour lui demander la liste des PLMN "visibles" ou disponibles. La couche MM adresse la requête AVAIL_PLMN_REQ à la couche RR pour connaître les PLMN visibles. La couche RR adresse la requête POWER_REQ à la couche L1 pour demander au circuit d'interface radio COM de rechercher les canaux de fréquences visibles en analysant leur niveau de réception. Pour cela, on essaye de se synchroniser sur chacune de ces fréquences et on mesure le niveau de puissance reçue pour chaque fréquence.

Plus précisément, seuls les canaux dits utilisables, ayant un niveau suffisant, sont retenus et entrés dans un tableau qui est ensuite remonté à la couche RR. Les fréquences fi (où i est un indice de numérotation) sont rangées dans le tableau dans l'ordre des puissances décroissantes (pi>pi+1).

Pour chacune des n fréquences fi trouvées (i = 1 à n), RR envoie une requête SYNC_REQ à L1 pour demander à l'interface radio de se synchroniser sur la fréquence fi passée en paramètre, afin d'écouter les informations SYSINFO qui transitent sur cette fréquence, et en particulier l'identifiant du PLMN auquel la fréquence appartient. L1 répond à RR en lui remontant l'information SYSINFO demandée ou bien un message d'erreur de synchronisation "SYNC_ERROR".

Toutes les fréquences fi sont ainsi "décodées" pour pouvoir ensuite établir et mémoriser la liste des PLMN visibles avec leur niveau de puissance. Plusieurs fréquences pouvant appartenir à un même PLMN, on ne mémorise qu'une fois un PLMN avec son niveau de puissance. En effet, comme les fréquences sont décodées dans l'ordre des puissances décroissantes, la première fois qu'un PLMN apparait, sa puissance associée correspond forcément à celle de sa "meilleure cellule", c'est-à-dire la cellule qui offre le canal de fréquence reçu avec la plus forte puissance.

Une liste PLMN_AVAIL des PLMN disponibles, classés par ordre de puissance décroissante est remontée à la couche MM. Celle-ci effectue ensuite un croisement entre la liste PLMN_AVAIL et deux autres listes mémorisée au sein du mobile. Il s'agit d'une liste des PLMN dits interdits auprès desquels le mobile n'a pas l'autorisation de se connecter et d'une liste des PLMN dits préférentiels, sur lesquels l'utilisateur bénéficie de tarifs avantageux. Cette dernière liste est éventuellement pré-enregistrée au moment de la configuration logicielle par le fournisseur de réseau ou par l'utilisateur lui-même.

Une liste croisée PLMN_SELECT est ensuite affichée à l'écran du mobile ; les PLMN y sont classés selon l'ordre spécifié par la norme. Les niveaux de puissance associés aux différents PLMN ont éventuellement été codés pour faciliter la lecture, par exemple à l'aide d'un nombre entier compris entre 1 et 4 pour permettre à l'utilisateur d'estimer la puissance de réception relative de chaque PLMN.

Il ne reste plus ensuite à l'utilisateur qu'à sélectionner manuellement à l'aide de son clavier, le PLMN de son choix en fonction des informations affichées. Une requête d'enregistrement manuelle sur le PLMN sélectionné est alors transmise au réseau selon un protocole classique.

Un système, un équipement et un procédé viennent ainsi d'être décrits à l'aide d'exemples conformément à l'invention pour permettre à un utilisateur de connaître la puissance de réception de tous les systèmes fonctionnant dans une zone de couverture donnée afin éventuellement de se connecter sur le système le plus puissant. Des variantes de réalisation apparaîtront à l'homme de l'art, sans sortir du cadre de l'invention.

## Revendications

1. Système de radiocommunications du type cellulaire ayant une puissance de réception dans une zone de couverture radio donnée commune à au moins un autre système du même type, ces systèmes étant dits accessibles par une station radio mobile située dans ladite zone commune lorsque leur puissance de réception est supérieure à une valeur de consigne, ladite station comportant des moyens de mesure des puissances de réception de ces systèmes,
caractérisé en ce que ladite station comporte également des moyens de contrôle des résultats de mesures pour fournir à un utilisateur des indications sur lesdites puissances de réception des systèmes accessibles.

2. Système selon la revendication 1, auprès duquel ladite station mobile est enregistrée à un instant donné, dit système courant,
caractérisé en ce que ladite station comporte des moyens de sélection manuelle pour sélectionner un système accessible distinct du système courant, et des moyens de connexion sur ce système.

3. Système selon l'une des revendications 1 ou 2, caractérisé en ce que les moyens de contrôle comportent un dispositif d'affichage pour afficher lesdites indications de puissance.

4. Système selon la revendication 3, caractérisé en ce qu'il fonctionne conformément à une recommandation de type ETS 300 507 paragraphe 3.2.2.2 de l'ETSI (de l'anglais European Telecommunications Standards Institute).

5. Procédé de sélection manuelle mis en oeuvre par une station mobile comportant des moyens de communication par lien radio avec au moins un système de radiocommunications du type cellulaire ayant un niveau de puissance de réception dans une zone de couverture donnée, un système de ce type étant dit accessible dans ladite zone lorsque sa puissance de réception y est supérieure à une valeur de consigne, caractérisé en ce qu'il comporte :
- une étape de mesure desdits niveaux de puissance reçus par ladite station radio dans la zone de couverture,
- une étape d'affichage au niveau de ladite station radio, de codes de puissance correspondant aux niveaux mesurés.

6. Procédé selon la revendication 5, caractérisé en ce qu'il comporte de plus :
- une étape de sélection manuelle pour sélectionner, en fonction des codes affichés, un système parmi les systèmes accessibles dans ladite zone.

7. Procédé selon l'une des revendications 5 ou 6, caractérisé en ce qu'il est conforme à une recommandation de type ETS 300 507 paragraphe 3.2.2.2 de l'ETSI (de l'anglais European Telecommunications Standards Institute).

8. Equipement radio mobile comportant :
- des moyens de communication par lien radio avec au moins un système de transmissions radioélectriques du type cellulaire ayant une puissance de réception dans une zone de couverture donnée, un système étant dit accessible dans ladite zone lorsque sa puissance de réception y est supérieure à une valeur de consigne,
- des moyens de mesure des puissances de réception des systèmes accessibles,
caractérisé en ce qu'il comporte des moyens de contrôle des résultats de mesure pour fournir à un utilisateur des indications de puissance associées auxdits systèmes.

9. Equipement radio mobile selon la revendication 8, caractérisée en ce que les moyens de contrôle comportent un dispositif d'affichage pour afficher, à partir des résultats de mesure, des codes de puissance significatifs pour l'utilisateur, associés respectivement aux systèmes accessibles.

10. Equipement radio mobile selon la revendication 9, comportant :
- des moyens de sélection manuelle d'un système parmi les systèmes accessibles,
- des moyens de connexion auprès de ce système, pour s'enregistrer auprès de ce système sélectionné en fonction de sa puissance de réception dans ladite zone.
